# EUROPÄISCHE PATENTSCHRIFT

(11) **EP 1 281 466 B1**
(45) Veröffentlichungstag und Bekanntmachung des Hinweises auf die Patenterteilung: **02.11.2006**
(21) Anmeldenummer: 02015891.1
(22) Anmeldetag: 17.07.2002
(51) Int. Cl.: B23D 77/02, B23B 51/04

(54) **Werkzeug zur spanenden Bearbeitung**
Tool for chip forming working
Outil d'usinage par enlèvement de copeaux

(30) Priorität: 02.08.2001 DE 10138945
(43) Veröffentlichungstag der Anmeldung: 05.02.2003
(73) Patentinhaber: MAPAL Fabrik für Präzisionswerkzeuge Dr. Kress KG, D-73431 Aalen (DE)
(72) Erfinder:
(74) Vertreter: Gleiss & Grosse

(56) Entgegenhaltungen:
- DE-U- 29 920 573
- GB-A- 189 758
- US-A- 4 425 063
- PATENT ABSTRACTS OF JAPAN vol. 92, no. 35 (M-415), 21. September 1985 (1985-09-21) & JP 60 090623 A (SUMITOMO)

## Beschreibung

Die Erfindung betrifft ein Werkzeug zur spanenden Bearbeitung von Bohrungen in Werkstücken mit mindestens einer Messerplatte. Werkzeuge der hier angesprochenen Art sind bekannt. Insbesondere bei der Bearbeitung von Bohrungen in sehr dünnwandigen Bauteilen treten oft Vibrationen auf, sodass die Qualität der bearbeiteten Oberfläche häufig nicht befriedigend ist. Die Vibrationen treten auch bei langsamen Arbeitswerten, also bei geringen Schnitttiefen und bei einem relativ langsamen Vorschub auf, (siehe z.B. DE-U-29920573).

Es ist daher Aufgabe der Erfindung, ein Werkzeug der eingangs genannten Art zu schaffen, das diese Nachteile nicht aufweist.

Zur Lösung dieser Aufgabe wird ein Werkzeug vorgeschlagen, das die in Anspruch 1 genannten Merkmale aufweist. Es zeichnet sich dadurch aus, dass die mindestens eine Messerplatte so in die Umfangsfläche des Werkzeugs eingesetzt ist, dass bei Bearbeitung des Werkstücks zwei in einem Abstand zueinander angeordnete Führungsflächen gegeben sind, die der Abstützung des Werkzeugs an der bearbeiteten Werkstückoberfläche dienen. Die Führungsflächen sind in einem Abstand auf der Messerplatte vorgesehen und liegen - in Drehrichtung gesehen - hintereinander. Dadurch, dass die bei der Bearbeitung des Werkstücks auftretenden Kräfte durch die Führungsflächen abgestützt werden, können Vibrationen auch bei höheren Arbeitswerten vermieden werden.

Besonders bevorzugt wird ein Ausführungsbeispiel des Werkzeugs, das sich dadurch auszeichnet, dass die Messerplatte mindestens eine Schneidkante mit positivem Anschliff aufweist. Diese Ausgestaltung sorgt dafür, dass an der Schneidkante geringere Schnittkräfte auftreten. Auch dadurch können Vibrationen bei der Bearbeitung von Bohrungen, insbesondere in dünnwandigen Bauteilen, vermieden zumindest reduziert werden.

Weitere Ausgestaltungen ergeben sich aus den übrigen Unteransprüchen.

Die Erfindung wird im folgenden anhand der Zeichnung näher erläutert. Es zeigen:
- Figur 1: eine Prinzipskizze einer Seitenansicht eines Werkzeugs;
- Figur 2: eine stark vergrößerte Ansicht der Stirnseite des in Figur 1 dargestellten Werkzeugs und
- Figur 3: eine perspektivische Ansicht einer Messerplatte in starker Vergrößerung.

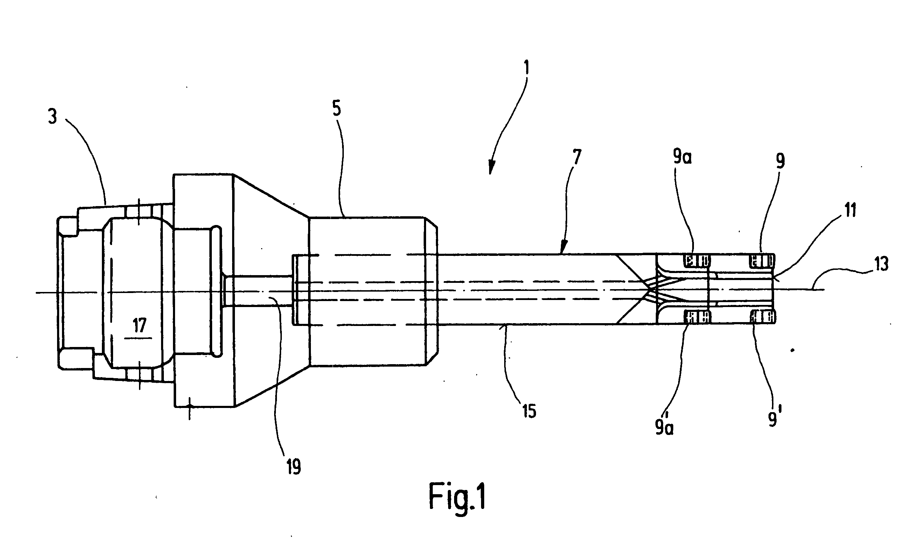

Das in Figur 1 dargestellte Werkzeug 1 umfasst einen üblichen Schaft 3, der Teil eines Werkzeughalters 5 ist. In diesen ist ein Werkzeugeinsatz 7 eingebracht, beispielsweise eingeschrumpft oder auf andere Weise befestigt. Werkzeughalter 5 und Werkzeugeinsatz 7 können auch aus einem Stück bestehen. Das Werkzeug 1 wird über den Schaft 3 auf übliche Weise mit einer Werkzeugmaschine gekoppelt.

An dem dem Werkzeughalter 5 gegenüberliegenden freien Ende des Werkzeugeinsatzes 7 ist mindestens eine Messerplatte 9 vorgesehen. Bei dem hier dargestellten Ausführungsbeispiel sind nahe einer Stirnseite 11 des Werkzeugeinsatzes zwei einander gegenüberliegende Messerplatten 9 und 9' vorgesehen. In einem in Richtung einer Drehachse 13 gemessenen Abstand zu diesen Messerplatten 9 und 9' sind weitere Messerplatten 9a und 9'a vorgesehen. Das hier dargestellte Ausführungsbeispiel des Werkzeugs 1 weist also in unmittelbarer Nähe zur Stirnseite 11 auf einer gedachten Ringfläche eine erste Gruppe von Messerplatten 9, 9' und in einem in axialer Richtung gesehenen Abstand dazu eine zweite Gruppe von Messerplatten 9a und 9a' auf.

Aus der Darstellung gemäß Figur 1 ist erkennbar, dass die Messerplatten 9, 9', 9a und 9'a so in eine Umfangsfläche 15 des Werkzeugs 1 beziehungsweise des Werkzeugseinsatzes 7 eingesetzt sind, dass diese quasi tangential angeordnet sind.

Aus der Seitenansicht gemäß Figur 1 ist ersichtlich, dass der Schaft 5 hohl ist, um eine sogenannte Hohlschaftspannung zu realisieren. Aus einem Hohlraum 17 des Schafts 5 verläuft koaxial zur Drehachse 13 ein Kühl- und Schmiermittelkanal 19, der sich durch den Werkzeugeinsatz 7 erstreckt und sich in der Nähe der Messerplatten 9, 9', 9a, 9'a öffnet. Es ist also möglich, Kühl- und/oder Schmiermittel an die aktiven Schneiden der Messerplatten heranzuführen.

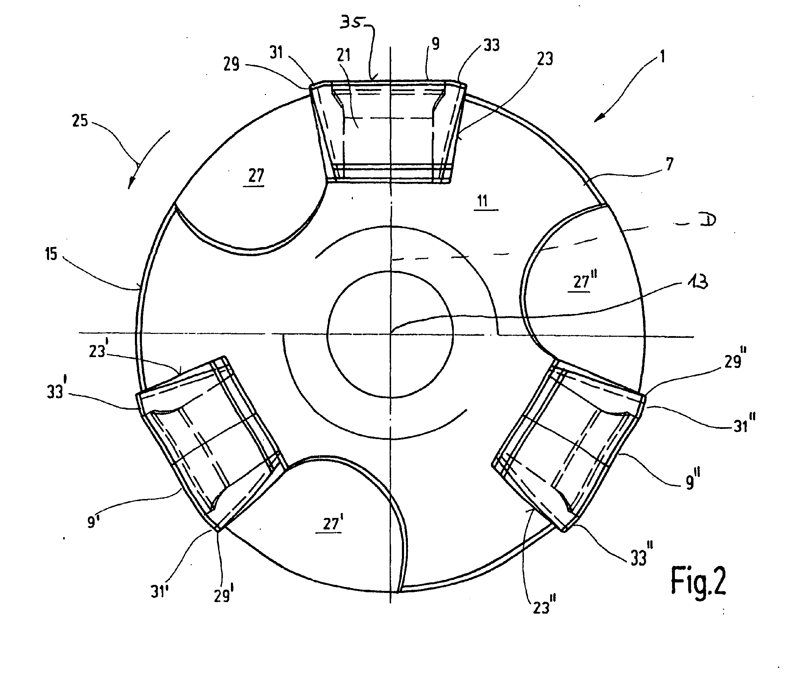

Aus der in Figur 2 gezeigten, stark vergrößerten Darstellung der Stirnseite 11 des Werkzeugs 1 beziehungsweise des Werkzeugeinsatzes 7 ist deutlich erkennbar, dass in die Umfangsfläche 15 auch drei, in Umfangsrichtung gesehen, in gleichem Abstand zueinander angeordnete Messerplatten 9, 9' und 9" angeordnet sein können. Durch gestrichelte Linien ist angedeutet, dass die Messerplatten jeweils von einer Durchgangsöffnung 21 durchdrungen werden, die lediglich anhand der oberen Messerplatte 9 erläutert wird. Durch diese Durchgangöffnung 21 kann eine hier nicht dargestellte Spannschraube geführt werden, die die Messerplatten am Grundkörper des Werkzeugs 1 beziehungsweise des Werkzeugeinsatzes 7 hält. Dazu sind in die Umfangsfläche 15 geeignete Nuten 23, 23' und 23'' in den Grundkörper des Werkzeugs 1 beziehungsweise des Werkzeugeinsatzes 7 eingebracht. Die Messerplatten können auch in den Nuten auf andere Weise fixiert sein, beispielsweise durch Löten oder dergleichen.

In axialem Abstand, also in einem Abstand in Richtung der Drehachse 13 gesehen, sind wiederum vorzugsweise drei Messerplatten vorgesehen, wie dies prinzipiell aus Figur 1 ersichtlich ist (siehe dort Messerplatten 9a und 9'a). Die Messerplatten sind jeweils auf einer Ringfläche und - in Richtung der Drehachse gesehen - in einer Reihe angeordnet. Es ist grundsätzlich auch möglich, mehr als drei derartiger Messerplatten vorzusehen und diese auf Ringflächen oder auf beliebige Art und Weise anzuordnen. Es hat sich aber gezeigt, dass besonders bei Werkzeugen mit einem kleinen Durchmesser eine hervorragende Abstützung und damit vibrationsarme Bearbeitung bei drei Messerplatten pro Umfangsbereich gegeben ist.

Bei der Bearbeitung von zylindrischen Oberflächen in Werkstücken, insbesondere von Bohrungsoberflächen kann das Werkzeug 1 in Rotation versetzt und in ein stillstehendes Werkstück eingebracht werden. Es ist auch denkbar, das Werkstück in Rotation zu versetzen und das Werkzeug 1 stillstehen zu lassen. Entscheidend ist eine Relativbewegung zwischen den Messerplatten und der zu bearbeitenden Werkstückoberfläche. Im folgenden wird davon ausgegangen, dass das Werkzeug 1 bei der Bearbeitung einer Bohrungsoberfläche gegen den Uhrzeigersinn rotiert, was durch einen Pfeil 25 angedeutet ist. In Drehrichtung gesehen ist vor jeder Messerplatte eine Spannut 27, 27', 27'' angeordnet, die in dem Grundkörper des Werkzeugeinsatzes 7 eingebracht ist. Die Spannuten, die auch als Spanraum bezeichnet werden, dienen der Aufnahme der bei der Werkstückbearbeitung entstehenden Späne.

Bei der Bearbeitung eines Werkstücks wird das Werkzeug 1 in Richtung seiner Drehachse 13 verlagert. Bei der Darstellung gemäß Figur 1 bewegt sich das Werkzeug dabei von links nach rechts, bei der Darstellung gemäß Figur 2 aus der Bildebene heraus auf den Betrachter zu.

Die in Drehrichtung gesehen vorderen Kanten der Messerplatten bilden jeweils eine Schneidkante 29, 29' beziehungsweise 29''. Die Messerplatten sind, wie aus Figur 2 deutlich wird, quasi tangential in die Umfangsfläche 15 des Werkzeugs 1 eingesetzt. Sie weisen jeweils eine der Schneidkante 29, 29', 29'' unmittelbar nacheilende erste Führungsfläche 31, 31', 31'' auf. Außerdem ist an der der Schneide 29 gegenüberliegenden Seitenkante der Messerplatte jeweils eine zweite Führungsfläche 33, 33', 33" vorgesehen.

Jede der Messerplatten stützt sich also mit zwei Führungsflächen, nämlich mit der ersten Führungsfläche 31, 31', 31'' und mit der zweiten Führungsfläche 33, 33', 33'' an dem bearbeiteten Werkstück ab.

Figur 2 zeigt deutlich, dass die in Drehrichtung gesehen vordere Führungsfläche 31 unmittelbar auf die Schneide 29 folgt, während die zweite Führungsfläche 33 der ersten Führungsfläche 31 in einem Abstand nacheilt. Einer aktiven Schneide, also hier der Schneide 29 sind also jeweils zwei Führungsflächen 31 und 33 zugeordnet, die auf ein und derselben Messerplatte 9 angeordnet sind. Auch die Führungsflächen 31', 33' und 31'' und 33'' tragen zur Führung des Werkzeugs 1 in der zu bearbeitenden Bohrung bei.

Aus der Darstellung gemäß Figur 2 wird deutlich, dass die erste und zweite auch als Führungsfase bezeichnete Führungsfläche 31, 32 einer Messerplatte in einem Abstand angeordnet sind. In Figur 2 verlaufen die Führungsflächen senkrecht in die Bildebene hinein, damit also im wesentlichen parallel zur Drehachse 13 des Werkzeugs 1 beziehungsweise des Werkzeugeinsatzes 7.

Da die Führungsflächen 31 und 33 der Messerplatte 9 jeweils an den im Wesentlichen parallel zur Drehachse 13 verlaufenden Längskanten der Messerplatte 9 angeordnet sind, wird die Messerplatte 9 sicher in die zugehörige Nut 23 gepresst und stützt sich einerseits an dem der Drehachse 13 zugewandten Boden der Nut und an der aktiven Schneide 29 gegenüberliegenden Seitenflanke der Nut 23 ab, so dass die bei der Bearbeitung einer Bohrung entstehenden Schnittkräfte sicher in den Grundkörper des Werkzeugs 1 eingeleitet werden.

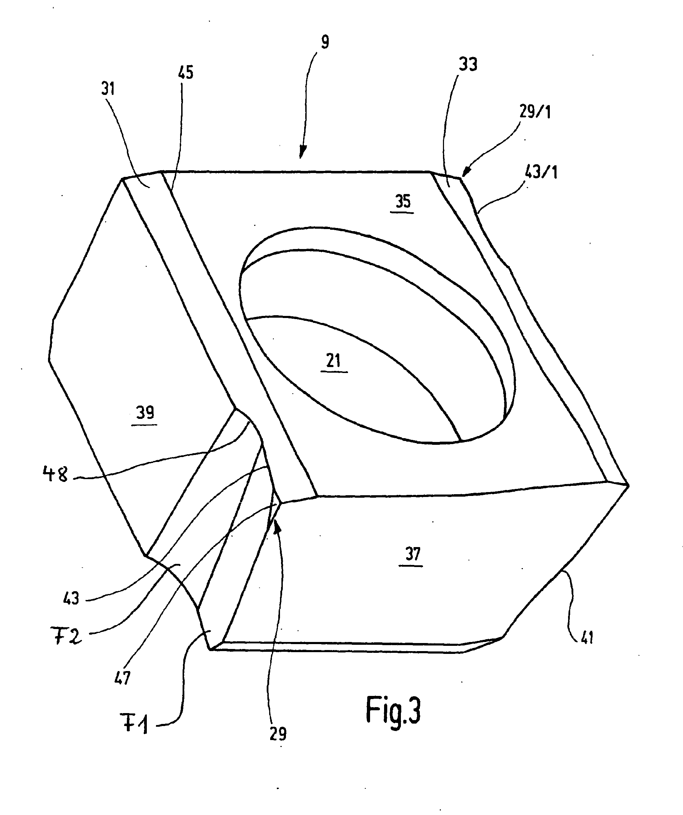

Die Ausgestaltung der Messerplatte wird aus der perspektivischen Darstellung gemäß Figur 3, die die Messerplatte 9 noch einmal deutlich vergrößert wiedergibt, klar:

Die Messerplatte 9 ist im Wesentlichen rechteckförmig ausgebildet. Die Darstellung gemäß Figur 3 zeigt die außenliegende Oberseite 35 der Messerplatte 9. Die Oberseite 35 der Messerplatte 9 ist, wie aus Figur 2 ersichtlich, so angeordnet, dass eine die Drehachse 13 des Werkzeugs 1 schneidende Durchmesserlinie D senkrecht auf der Oberseite 35 steht. Die Oberseite 35 ist damit, wie die gesamte Messerplatte 9, tangential in Umfangsfläche 15 des Werkzeugs 1 eingesetzt.

Die übrigen Messerplatten 9' und 9'' sowie 9a, 9'a, die prinzipiell identisch angeordnet sind wie die in Figur 2 wiedergegebenen Messerplatten, sind alle identisch ausgebildet. Daher wird hier lediglich die Messerplatte 9 im folgenden näher erläutert.

Die Vorderseite 37 der Messerplatte 9 ist die in Figur 2 dem Betrachter zugewandte Seite. Von dieser gehen die beiden Führungsflächen, nämlich die erste Führungsfläche 31 und die zweite Führungsfläche 33 entlang Seitenkanten 39 und 41, aus. Die Führungsflächen 31 und 33 verlaufen parallel zueinander und, wie gesagt, im wesentlichen parallel zu der hier nicht dargestellten Drehachse 13 des Werkzeugs 1. Aus der perspektivischen Ansicht gemäß Figur 3 ist ersichtlich, dass sich die Führungsflächen 31 und 33 über die gesamte Länge der Seitenkanten 39 und 41 erstrecken und dass deren quer zur Längsrichtung der Seitenkanten 39 und 41 gemessene Breite wesentlich geringer ist als deren Länge. Die Breite der Führungsflächen kann an verschiedene Bearbeitungsfälle angepasst werden. Die Führungsflächen 31 und 33 sind bei dem hier dargestellten Ausführungsbeispiel unter einem spitzen Winkel gegenüber der Oberseite 35 geneigt und fallen in entgegengesetzte Richtungen nach außen ab. Dabei ist der Neigungswinkel über die gesamte Breite der Führungsflächen 31 und 33 konstant. Es ist auch möglich, über die Breite der Führungsflächen 31 und 33 Bereiche mit unterschiedlichen Neigungen vorzusehen, so beispielsweise einen ersten Bereich, der sich an die Seitenfläche 39 anschließt und einen zweiten Bereich, der an die Oberseite 35 angrenzt. Dabei kann der erste Bereich gegenüber der Oberseite 35 steiler abfallen als der erste unmittelbar an die Oberseite 35 angrenzende Bereich der Führungsfläche 31.

Die Führungsflächen 31 und 33 können auch gewölbt ausgebildet werden und einen Radius aufweisen, wie er bei Führungsleisten beispielsweise von Reibahlen bekannt ist. Der Radius der Führungsflächen 31 und 33 kann also so gewählt werden, dass er etwas kleiner ist als der der bearbeiteten Bohrungsoberfläche oder aber auch deutlich kleiner sein als dieser. Die Wahl des Radius' der Führungsflächen 31 und 33 kann an den Bearbeitungsfall angepasst werden.

Wesentlich ist, dass sich das Werkzeug 1 im Bereich der Messerplatte 9 einerseits in unmittelbarer Nähe der aktiven Schneidkante abstützt, die mit dem Werkstück in Eingriff tritt und andererseits mit einer weiteren Führungsfläche, die der ersten Führungsfläche -in Drehrichtung gesehen- nacheilt.

In die Oberseite 35 mündet die Durchgangsöffnung 21, durch die eine Spannschraube zur Fixierung der Messerplatte 9 am Grundkörper des Werkzeugs 1 beziehungsweise des Werkzeugeinsatzes 7 geführt werden kann.

Die Messerplatte 9 ist als Wendeplatte ausgebildet. Die vordere linke Kante dient als Schneidkante 29, ebenso die diagonal gegenüberliegende Kante, die die Schneidkante 29/1 bildet. Wenn also die vordere linke Schneidkante 29 stumpf ist, wird die Spannschraube gelöst und die Messerplatte um die Mittelachse der Durchgangsöffnung 21 um 180° gedreht, sodass die Schneidkante 29/1 vorne links zu liegen kommt und bei Einsatz des Werkzeugs 1 als aktive Schneide wirkt.

Die Schneidkante 29 wird, wie die Schneidkante 29/1 dadurch gebildet, dass der vordere, der Vorderseite 37 zugewandte Bereich der Messerplatte 9 einem Schleifvorgang unterworfen wird. Dabei wird der vordere linke Teil der Messerplatte 9 abgetragen. Die Schneidkante 29 umfasst einen Kantenbereich 43 nahe der Vorderseite 37, entsprechend einen Kantenbereich 43/1 im Bereich der Schneidkante 29/1. Aus der Darstellung gemäß Figur 3 ist ersichtlich, dass der Kantenbereich 43 mit einer inneren Begrenzungskante 45 der Führungsfläche 31 einen spitzen Winkel einschließt, der sich zur Vorderseite 37 der Messerplatte 9 öffnet. Es handelt sich hier vorzugsweise um einen spitzen Winkel im Bereich von 10°. Es wird hier also ein sogenannter positiver Anschliff im Bereich der Schneidkante 29 ausgebildet. Entsprechendes gilt für die gegenüberliegende Schneidkante 29/1.

An der linken Vorderkante der Messerplatte 9 ist eine Fase 47 vorgesehen. Durch diese Ausgestaltung ist gewährleistet, dass beim Einbringen des Werkzeugs 1 in eine Bohrung eines Werkstücks zunächst diese Fase 47 mit dem Werkstück in Kontakt tritt, bis - beispielsweise nach ca. 1 mm - die beiden Führungsflächen 31 und 33 mit der Werkstückoberfläche in Eingriff treten und damit das Werkzeug 1 in der zu bearbeitenden Bohrung sicher abstützten.

Insgesamt ergibt sich der Verlauf der Schneidkante 29 und der der Schneidkante 29/1 durch die Schnittlinie der Führungsflächen 31 und 33 mit seitlichen Flächen der Messerplatte 9. Im Folgendem wird auf die in Figur 3 vorne links liegende Schneidkante 29 näher eingegangen, die identisch ausgebildet ist wie die Schneidkante 29/1.

Ein erster Bereich der Schneidkante 29, der sich an die Vorderseite 37 der Messerplatte 9 anschließt, wird gebildet durch die Schnittlinie zweier Flächen, nämlich einerseits der Führungsfläche 31 und andererseits der Fase 47. Der sich daran anschließende Kantenbereich 43 entspricht der Schnittlinie der ersten Führungsfläche 31 mit einem ersten Flächenabschnitt F1, der durch den Schleifvorgang entstanden ist und hier die seitliche Begrenzung der Messerplatte 9 bildet. An den Kantenbereich 43 schließt sich ein unter einem Bogen verlaufender Abschnitt 48 an, der gebildet wird durch die Schnittlinie der Führungsfläche 31 mit einem durch den Schleifvorgang entstandenen Flächenabschnitt F2, der in die Seitenfläche 39 übergeht.

Der Verlauf der Schneidkante 29/1 an der diagonal gegenüberliegenden oben rechten Ecke der Messerplatte 9 ist punktsymmetrisch, so das also die Messerplatte 9 als Wendeplatte einsetzbar ist, also bei Verschleiß der Schneide 29 um 180° gedreht werden kann, so dass die in Figur 3 rechts oben angeordnete Schneidkante 29/1 dann unten links angeordnet ist.

Die im wesentlichen rechteckförmig ausgebildeten Messerplatten sind überaus klein. Ihre Breite zwischen den Führungsflächen 31 und 33 beträgt beispielsweise ca. 3,8 mm und ihre in Richtung der Drehachse 13 des Werkzeugs 1 gemessene Länge ca. 4,0 mm. Durch die spezielle Ausgestaltung der Oberseite 35 der Messerplatten, also durch die beiden auch als Führungsfase bezeichneten Führungsflächen 31 und 33, ist es möglich, das Werkzeug 1 optimal in einer zu bearbeitenden Bohrung zu führen. Durch den positiven Anschliff im Bereich der Schneidkante 29 beziehungsweise 29/1 werden bei der Bearbeitung von Werkstücken relativ geringe Schnittkräfte erzeugt. Da sich das Werkzeug 1 nach einer sehr kurzen Bearbeitungsphase, nämlich bereits nach ca. 1 mm Einführungsweg in die zu bearbeitende Bohrung, an jeder Messerplatte im Bereich der beiden Führungsflächen 31 und 33 abstützt, werden Vibrationen bei der Bearbeitung von Werkstücken auf ein Minimum reduziert, in der Regel praktisch ganz vermieden. Dies gilt insbesondere auch bei dünnwandigen Bauteilen, selbst bei einer Schnitttiefe von 0,3 mm pro Umdrehung und bei einem Vorschub von 80 m pro Minute.

Auf einfache Weise ist es also möglich, ein Werkzeug 1 zu schaffen, das auch bei der Bearbeitung von sehr dünnwandigen Bauteilen eine optimale Führung gewährleistet. Dies gilt insbesondere auch dann, wenn der Durchmesser des Werkzeugs 1 relativ klein ist, wenn also die Eigenstabilität des Werkzeugs nicht sonderlich groß ist. Es ist also möglich, Werkzeuge der hier angesprochenen Art mit einem Durchmesser von 11 mm zu realisieren und hervorragende Arbeitsergebnisse zu erzielen. Das heißt also, dass bei der spanenden Bearbeitung von sehr dünnwandigen Bauteilen auch bei sehr kleinen Werkzeugen eine extrem vibrationsarme Bearbeitung möglich ist, sodass hervorragende Oberflächenqualitäten und eine sehr genaue Maßhaltigkeit erzielbar sind.

## Patentansprüche

1. Werkzeug zur spanenden Bearbeitung von Bohrungen in dünnwandigen Werkstücken, mit mindestens einer Messerplatte, **dadurch gekennzeichnet, dass** die mindestens eine Messerplatte (9,9',9'';9a,9'a) so in die Umfangsfläche (15) des Werkzeugs (1) eingesetzt ist, dass zwei - in Drehrichtung gesehen - in einem Abstand zueinander angeordnete Führungsflächen (31,33) gegeben sind, die der Abstützung des Werkzeugs (1) an der bearbeiteten Werkstückoberfläche dienen.

2. Werkzeug nach Anspruch 1, **dadurch gekennzeichnet, dass** die Führungsflächen (31,33) im Wesentlichen parallel zueinander und/oder zur Drehachse (13) des Werkzeugs (1) verlaufen.

3. Werkzeug nach Anspruch 1 oder 2, **dadurch gekennzeichnet, dass** die Führungsflächen (31,33) im Wesentlichen -quer zu ihrer Längserstreckung- eben ausgebildet sind.

4. Werkzeug nach einem der vorhergehenden Ansprüche, **dadurch gekennzeichnet, dass** die Führungsflächen (31,33) Bereiche aufweisen, die zur Oberseite (35) der Messerplatte (9) - quer zur Längsrichtung der Führungsflächen (31,33) gesehen - einen unterschiedlichen Neigungswinkel aufweisen.

5. Werkzeug nach einem der vorhergehenden Ansprüche, **dadurch gekennzeichnet, dass** die Führungsleisten (31,33) quer zu ihrer Längserstreckung gewölbt, vorzugsweise unter einem Radius gewölbt, ausgebildet sind.

6. Werkzeug nach einem der vorhergehenden Ansprüche, **dadurch gekennzeichnet, dass** die Messerplatte (9,9',9'';9a,9'a) als Wendeplatte ausgebildet ist.

7. Werkzeug nach einem der vorhergehenden Ansprüche, **dadurch gekennzeichnet, dass** die Messerplatte (9,9',9'';9a,9'a) eine Durchgangsöffnung (21) aufweist.

8. Werkzeug nach einem der vorhergehenden Ansprüche, **dadurch gekennzeichnet, dass** die Messerplatte (9,9',9'';9a,9'a) - in Draufsicht gesehen - im wesentlichen rechteckförmig ausgebildet ist.

9. Werkzeug nach einem der vorhergehenden Ansprüche, **dadurch gekennzeichnet, dass** die Messerplatte (9,9',9'';9a,9'a) fast quadratisch ausgebildet ist und vorzugsweise 3,8 mm breit und 4,0 mm lang ist.

10. Werkzeug nach einem der vorhergehenden Ansprüche, **dadurch gekennzeichnet, dass** die Messerplatte (9,9',9'';9a,9'a) tangential in die Umfangsfläche (15) des Werkzeugs (1) einsetzbar ist.

11. Werkzeug nach einem der vorhergehenden Ansprüche, **dadurch gekennzeichnet, dass** drei Messerplatten (9,9',9'';9a,9'a) auf einer gedachten Ringfläche - vorzugsweise im gleichen Abstand zueinander - am Werkzeug (1) anbringbar sind.

12. Werkzeug nach einem der vorhergehenden Ansprüche, **dadurch gekennzeichnet, dass** mehrere Messerplatten (9,9',9'';9a,9'a) in Richtung der Drehachse (13) in einem Abstand zueinander am Werkzeug (1) anbringbar sind.

13. Werkzeug nach einem der vorhergehenden Ansprüche, **dadurch gekennzeichnet, dass** die Messerplatte (9,9',9'';9a,9'a) mindestens eine Schneidkante (29;29/1) mit positivem Anschliff aufweist.

## Claims

1. Machining tool for bores in thin-walled work pieces, with at least one cutting plate, **characterized in that** the at least one cutting plate (9, 9', 9", 9a, 9'a) is inserted into the circumference surface (15) of the tool (1) in such a way that two - viewed in pivot direction - guide surfaces (31, 33) arranged at a distance to one another are present, which serve as a support of the tool (1) at the machining work piece surface.

2. Tool according to claim 1, **characterized in that** the guide surfaces (31, 33) run essentially parallel to each other and/or to the pivot axis (13) of the tool (1).

3. Tool according to claims 1 or 2, **characterized in that** the guide surfaces (31, 33) are constructed essentially level - lateral to their longitudinal extension.

4. Tool according to one of the previous claims, **characterized in that** the guide surfaces (31, 33) have areas that contain -viewed lateral to the longitudinal direction of the guide surfaces (31, 33) - various tilt angles towards to top (35) of the cutting plate (9).

5. Tool according to one of the previous claims, **characterized in that** the guide rails (31, 33) are constructed in a dome shape lateral to their longitudinal extension, preferably domed at a radius.

6. Tool according to one of the previous claims, **characterized in that** the cutting plate (9, 9', 9"; 9a, 9'a) is constructed as a reversing plate.

7. Tool according to one of the previous claims, **characterized in that** the cutting plate (9, 9', 9"; 9a, 9'a) has a clearance hole (21).

8. Tool according to one of the previous claims, **characterized in that** the cutting plate (9, 9', 9"; 9a, 9'a) - viewed from the top - is constructed essentially in a rectangle shape.

9. Tool according to one of the previous claims, **characterized in that** the cutting plate (9, 9', 9"; 9a, 9'a) is constructed nearly square, and preferably is 3.8 mm wide and 4.0 mm long.

10. Tool according to one of the previous claims, **characterized in that** the cutting plate (9, 9', 9"; 9a, 9'a) can be inserted tangentially into the circumference surface (15) of the tool (1).

11. Tool according to one of the previous claims, **characterized in that** three cutting plates (9, 9', 9"; 9a, 9'a) can be attached on an assumed ring surface - preferably at the same distance to one another - at the tool (1).

12. Tool according to one of the previous claims, **characterized in that** several cutting plates (9, 9', 9"; 9a, 9'a) can be attached on the tool (1) in the direction of the pivot axis (13) at a distance to one another.

13. Tool according to one of the previous claims, **characterized in that** the cutting plate (9, 9', 9"; 9a, 9'a) has at least one cutting edge (29; 29/1) with a positive grind.

## Revendications

1. Outil d'usinage par enlèvement de copeaux d'alésages dans des pièces à usiner à paroi mince, comprenant au moins une plaque coupante, **caractérisé en ce que** l'au moins une plaque coupante (9, 9' ,9" ; 9a, 9'a) est insérée de telle sorte dans la surface périphérique (15) de l'outil (1) que les deux surfaces de guidage (31, 33) disposées à une certaine distance l'une de l'autre - vu dans le sens de rotation - servent à supporter l'outil (1) contre la surface de la pièce en cours d'usinage.

2. Outil selon la revendication 1, **caractérisé en ce que les** surfaces de guidage (31, 33) s'étendent pour l'essentiel parallèlement l'une par rapport à l'autre et/ou par rapport à l'axe de rotation (13) de l'outil (1).

3. Outil selon la revendication 1 ou 2, **caractérisé en ce que** les surfaces de guidage (31, 33) ont pour l'essentiel une forme plane - vue perpendiculairement à leur extension longitudinale.

4. Outil selon l'une quelconque des revendications précédentes, **caractérisé en ce que** les surfaces de guidage (31, 33) comportent des zones comportant un angle d'inclinaison différent par rapport à la face supérieure (35) de la plaque coupante (9) - vue perpendiculairement à la direction longitudinale des surfaces de guidage (31, 33).

5. Outil selon l'une quelconque des revendications précédentes, **caractérisé en ce que** les baguettes de guidage (31, 33) sont arquées perpendiculairement à leur extension longitudinale, de préférence arquées selon un certain rayon.

6. Outil selon l'une quelconque des revendications précédentes, **caractérisé en ce que** la plaque coupante (9, 9' ,9" ; 9a, 9'a) prend la forme d'une plaque réversible.

7. Outil selon l'une quelconque des revendications précédentes, **caractérisé en ce que** la plaque coupante (9, 9', 9" ; 9a, 9'a) comporte une ouverture de passage (21).

8. Outil selon l'une quelconque des revendications précédentes, **caractérisé en ce que** la plaque coupante (9, 9', 9" ; 9a, 9'a) prend pour l'essentiel une forme rectangulaire - vue en vue en élévation.

9. Outil selon l'une quelconque des revendications précédentes, **caractérisé en ce que** la plaque coupante (9, 9', 9" ; 9a, 9'a) prend une forme presque quadratique et fait de préférence 3,8 mm de large et 4,0 mm de long.

10. Outil selon l'une quelconque des revendications précédentes, **caractérisé en ce que** la plaque coupante (9, 9', 9" ; 9a, 9'a) peut être insérée tangentiellement dans la surface périphérique (15) de l'outil (1).

11. Outil selon l'une quelconque des revendications précédentes, **caractérisé en ce que** les trois plaques coupantes (9, 9' ,9" ; 9a, 9'a) peuvent être amenées sur une surface annulaire imaginaire - de préférence à équidistance les unes des autres - sur l'outil (1).

12. Outil selon l'une quelconque des revendications précédentes, **caractérisé en ce que** plusieurs plaques coupantes (9, 9', 9" ; 9a, 9'a) peuvent être disposées à une certaine distance les unes des autres sur l'outil (1) en direction de l'axe de rotation (13).

13. Outil selon l'une quelconque des revendications précédentes, **caractérisé en ce que** la plaque coupante (9, 9' ,9" ; 9a, 9'a) comporte au moins une arête coupante (29 ; 29/1) à coupe polie positive.
